# EUROPÄISCHE PATENTSCHRIFT

(11) **EP 1 916 593 B1**
(45) Veröffentlichungstag und Bekanntmachung des Hinweises auf die Patenterteilung: **05.01.2011**
(21) Anmeldenummer: 07401001.8
(22) Anmeldetag: 09.10.2007
(51) Int. Cl.: G06F 3/033, G06F 3/038

(54) **Dateneingabeverfahren für Computersysteme und Anordnung dafür**
Method for data input into computer systems and arrangement therefor
Méthode et dispositif pour la saisie des données pour systèmes d'ordinateurs

(30) Priorität: 24.10.2006 DE 102006049975
(43) Veröffentlichungstag der Anmeldung: 30.04.2008
(73) Patentinhaber: Arndt & Voss GmbH, 21255 Tostedt (DE)
(72) Erfinder: Arndt, Georg, 21255 Tostedt (DE)
(74) Vertreter: Hansen, Jochen

(56) Entgegenhaltungen:
- US-A- 5 729 251
- US-A1- 2003 095 109
- US-A1- 2003 171 096
- US-B1- 6 377 249

## Beschreibung

Die Erfindung betrifft ein Verfahren zur Dateneingabe für ein Datenverarbeitungssystem mit einem Bildschirm, einer Rechnereinheit und einem optischen System, wobei auf dem Bildschirm wenigstens ein Betätigungsfeld abgebildet wird, dessen Helligkeit und/oder Farbe fortlaufend in einem optischen Signal dargestellt, diese Helligkeits- und/oder Farbänderung vom optischen System detektiert und zu einem Dateneingabewert umgewandelt wird. Ferner betrifft die Erfindung eine datentechnische Anordnung zur Durchführung dieses Verfahrens.

Computersystemanwendungen, bei denen eine Tastatur oder Maus als Eingabegerät nicht erwünscht oder nicht möglich ist, werden häufig über einen berührungsempfindlichen Bildschirm (Touch-Screen) als multifunktionales Eingabe- und Anzeigegerät bedient. Dabei wird durch Druckbelastung, beispielsweise mittels eines Stifts (z. B. bei sog. PDA-Geräten), auf eine definierte Stelle auf dem Bildschirm ein an dieser Stelle dargestelltes Zeichen oder Funktionssymbol als Eingabewert erkannt und verarbeitet. Diese Art der Dateneingabe wird zunehmend bei Steuerungen von Produktionsmaschinen in industrieller Umgebung verwendet.

Derartige Produktionsmaschinen sind teils sehr komplex und somit kostenintensiv. In der Regel arbeiten sie im Dauerbetrieb. Ein Ausfall der Steuerung bzw. eines seiner Komponenten bedeutet daher einen Produktionsausfall mit entsprechend hohen Folgekosten. Da an den Computergestützten Steuergeräten für derartige Maschinen häufig der berührungsempfindliche Bildschirm ausfällt, können Prozessparameter nicht mehr angezeigt und auch nicht mehr geändert werden. Dies ist meist gleichbedeutend mit einem Ausfall der Produktionslinie. Da jedoch beim Ausfall eines Bildschirms der Rest der Steuerung und somit die Produktionslinie theoretisch funktionsfähig bleibt, würde ein schneller Austausch des Bildschirms die Ausfallzeit minimieren.

Dabei hat sich jedoch gezeigt, dass insbesondere in strukturschwachen Regionen berührungsempfindliche Bildschirme nicht verfügbar oder nicht schnell verfügbar sind. Entsprechend wäre es wünschenswert, normale, handelsübliche, also nicht berührungsempfindliche Bildschirme verwenden zu können.

Ferner sind im Stand der Technik optische Lesestifte bekannt, die optische Signale, nämlich Helligkeitswerte bzw. -unterschiede und/oder Farben bzw. Farbunterschiede detektieren können. Derartige Lesestifte sind beispielsweise in Verbindung mit einer Lichtquelle als Barcodeleser bekannt.

Weiter ist es aus der DE 41 29 602 A1 bekannt, eine Dateneingabe für einen Computer über einen Helligkeitsdetektor zu verwirklichen der eine von einer Projektionseinheit erzeugte Helligkeitsverteilung auf einer Projektionsfläche auswertet.

Darüber hinaus ist aus der DE 601 16 626 T2 eine externe Signaturvorrichtung für einen Computer mit optischer Dateneingabe über den Monitor bekannt, bei der die zu signierenden Daten über Variationen in Helligkeit oder Farbe eines Anzeigegeräts als Datenbits übertragen werden und von einem optischen Datenempfangssystem erfasst und ausgewertet werden. Dabei wird Synchronisierung des durch die Helligkeitsänderungen erzeugten Datensignals durch ein auf einem zweiten Kanal erzeugtes Taktsignal erreicht, um beispielsweise durch den Multitaskingbetrieb des Computers entstehende Zeitverzögerungen bei der Darstellung des optischen Signals berücksichtigen zu können.

Die Druckschrift US 2003/0171096A1 offenbart eine Anordnung und ein Verfahren zur Erfassung von Informationen, wie beispielsweise Digitalinformationen, die über Radio oder Fernsehen, Displays oder dgl. übertragen werden. Die entsprechend gesendeten Informationen können mit Hilfe eines mobilen Scanners von dem Display oder dgl. abgescannt werden und in entsprechende digitale Informationen gewandelt werden. Mit Hilfe eines so eingescannten Codes kann beispielsweise ein Einkauf vollzogen werden, indem entsprechende Informationen über das Internet beispielsweise an den ursprünglichen Anbieter der Informationen gesendet werden. Somit kann hier eine Bestellung von Waren oder dgl. ausgelöst werden.

Die Druckschrift US 5,729,251 offenbart ein Verfahren und eine Anordnung zum Einlesen von Informationen von einem Display mit Hilfe eines digitalen Lesestifts. Hier sind die zu übertragenen Informationen digital codiert.

Aufgabe der Erfindung ist es, ausgehend von dem eingangs genannten Problem, ein Verfahren sowie eine Anordnung zur Dateneingabe an Computersystemen anzugeben, bei dem weder eine Tastatur oder Maus hoch ein berührungsempfindlicher Bildschirm erforderlich sind.

Gelöst wird diese Aufgabe mit einem Verfahren gemäß Anspruch 1 und einer Anordnung gemäß Anspruch 16.

Wenn wenigstens vier verschiedene Helligkeits- und/oder Farbstufen definiert werden, wobei die Änderungen der Helligkeit und/oder Farbe des Betätigungsfeldes für die wenigstens vier Stufen ein Taktsignal zur Synchronisierung sowie ein binäres Datensignal als ein serielles Signal darstellen, kann durch eine einzige serielle Signalübertragung sowohl der im binären Datensignal verschlüsselte Dateneingabewert wie auch die Synchronisation des seriellen Datenstromes erreicht werden. Bewerkstelligt wird dies, in dem das dargestellte optische Signal durch Addition des Datensignals und des Taktsignals mit zueinander unterschiedlichen Amplituden generiert wird, womit Taktsignal und Datensignal in dem einzelnen seriellen Signal voneinander unterscheidbar sind. Der Eingabewert wird nach dem Lesen des optischen Signals durch Subtraktion des bekannten Taktsignals erkannt und dem System als Zeichencode zur Dateneingabe übergeben. Anhand des bekannten Taktsignals mit zum binären Datensignal unterschiedlicher Amplitude kann mit jeder Änderung des Taktsignals ein neues zu lesendes binäres Zeichen des Datensignals synchronisiert erkannt werden. Unregelmäßigkeiten in der zeitlich aufeinander folgenden Umschaltung der Helligkeits- und/oder Farbstufen können somit trotz der einkanaligen Signalübertragung erkannt und folglich korrigiert werden. Geschwindigkeitsänderungen der Datenverarbeitung, beispielsweise durch den Multitaskingbetrieb der Rechnereinheit hervorgerufen, können somit ausgeglichen werden.

Das oder die auf dem Bildschirm dargestellten Betätigungsfelder bilden quasi eine virtuelle Tastatur. Das in Form von Betätigungsfeldern dargestellte Tastaturlayout kann an beliebigen Stellen des Bildschirms angeordnet, beliebige Zeichenbelegungen und nach erfolgter Zeichenerkennung auch wieder neue Zeichenbelegungen erhalten. Es sind somit im Prinzip unendliche Steuerungsmöglichkeiten mit den softwaremäßig erstellten Betätigungsfeldern auf dem Bildschirm denkbar. Zusammen mit dem optischen System, das die Helligkeits-/Farbcodierung des jeweilig ausgewählten Betätigungsfeldes erfasst, können somit eine herkömmliche Tastatur bzw. ein Tastenfeld an Maschinen etc. sowie sensitive Bildschirme ersetzt werden.

Wenn die Amplituden des binären Datensignals und des Taktsignals sich um den Faktor 2 unterscheiden, ist das kleinste Vielfache in geradzahliger Basis den zu unterscheidenden Amplituden zugewiesen. Datenverarbeitungstechnisch können die Amplitudensignale wie Binärzeichen verarbeitet werden.

Dadurch, dass genau vier Helligkeits- und/oder Farbstufen gewählt werden, die ein Quartärsystem mit den Stufen 0, 1, 2 und 3 bilden, werden die minimal erforderlichen Helligkeits- und/oder Farbstufen angegeben, die sich aus einem Datensignal und einem addierten Taktsignal, die sich in ihren Amplituden unterscheiden, ergeben. Nur bei gleicher Amplitudengröße der beiden addierten Signale wäre ein optisches Signal im Tertiärsystem, also mit drei verschiedenen Amplitudenstufen möglich. Dieses Signal hätte jedoch den Nachteil, dass Datensignal und Taktsignal nicht unterscheidbar wären, also eine eindeutige Signalerkennung unmöglich wäre.

Dadurch, dass das Datensignal aus einem binären Zeichencode definierter Länge besteht, dem ein definiertes Kalibrierungs-, Synchronisations- und/oder Leersignal einer definierten Länge vorangestellt wird, welches nicht während der Darstellung des Datensignals als optisches Signal auftreten kann, wird eine stets gleiche Länge des aus dem definierten Kalibrierungs-, Synchronisations-und/oder Leersignal und dem Datensignal bestehenden, seriellen optischen Signals sichergestellt. Nach dem Lesen des optischen Signals durch das optische System kann somit problemlos eine Rücktransformation in den zu erkennenden binären Zeichencode erfolgen. Der Anfang einer jeweiligen seriellen Datenserie wird durch das Kalibrierungs-, Synchronisations- und/oder Leersignal bestimmt.

Mit einem 8-Bit-Zeichencode, also einem 8 binäre Zeichen langen Datensignal werden 2⁸, also 256 verschiedene Zeichen generiert. Beispielsweise kann daraus der bekannte ASCII-Code dargestellt werden.

Wenn das definierte Kalibrierungs-, Synchronisations- und/oder Leersignal einer definierten Länge genau 4 Bits aufweist, können die vier aufeinander folgenden Datenwerte (Bits) alle vier Helligkeits- und/oder Farbstufen umfassen, also alle unterschiedlich sein. Dies kann insbesondere zur Kalibrierung der Helligkeits-/Farbstufen wichtig sein.

Dadurch, dass zur Erzeugung des definierten Kalibrierungs-, Synchronisations-und/oder Leersignal das Taktsignal an den Bit-Positionen 2 und 3 des zu erzeugenden optischen Kalibrierungs-, Synchronisations- und/oder Leersignal miteinander vertauscht wird, ist es möglich, ein eineindeutiges Signal zum Kalibrieren zu generieren, welches in keinem der darstellbaren Zeichen vorkommt.

Um eine genaue Synchronisation des Datensignals zu erreichen, wird ein nächstes Bit des optischen Signals erkannt, wenn sich das optische Signal um mindestens eine Stufe der Helligkeits- und/oder Farbstufen verändert. D. h. bei jedem neuen Signalwert (nächstes Bit) ist im optischen Signal ein Stufensprung erkennbar.

Wenn aus dem vom optischen System mehrfach hintereinander erfassten Helligkeiten und/oder Farben des Betätigungsfeldes ein Wahrscheinlichkeitsspektrum ermittelt und innerhalb des Spektrums aus den Extrema der Häufungen die Lage der Helligkeits- und/oder Farbstufen kalibriert werden, kann das Dateneingabesystem im laufenden Betrieb auf die tatsächlichen Helligkeits-und/oder Farbstufen eingestellt werden. Damit wird das Dateneingabeverfahren völlig unabhängig von der Wahl des Monitors und auch seiner jeweiligen momentanen Einstellung von Helligkeit, Kontrast und dergleichen. Anschließend können die Extrema der Häufungen des Spektrums zur Bestimmung von Grenzwerten zwischen den Helligkeits- und/oder Farbstufen herangezogen werden. Dabei wird beispielsweise zwischen zwei aneinander grenzenden Helligkeitsstufen die Mitte als Grenzwert definiert, so dass Helligkeitswerte oberhalb des Grenzwertes der höheren Helligkeitsstufe und Helligkeiten kleiner als der Grenzwert der niedrigeren Helligkeitsstufe zugeordnet werden.

Um eine ausreichende Datenfülle zur Erstellung eines Wahrscheinlichkeitsspektrums zu erhalten, wird das optische Signal vom optischen System mit einer deutlich höheren Abtastrate als der serielle Datenabstand (Bitrate) abgetastet.

Wenn das optische Signal des darzustellenden Eingabewerts durch das definierte Kalibrierungs-, Synchronisations- und/oder Leersignal aus den mindestens vier Helligkeits- und/oder Farbstufen von einem inaktiven Zustand eineindeutig unterscheidbar und das optische System mittels dieser vier aktuell erkannten Stufen kalibriert wird, kann ausschließlich das definierte Kalibrierungs-, Synchronisations- und/oder Lesesignal zur Kalibrierung der Helligkeits- und/oder Farbstufen herangezogen werden.

Um etwaige Fehler bei der Datenübertragung aufdecken zu können, wird das zu erkennende optische Signal mehrfach hintereinander übereinstimmend erkannt. Beispielsweise könnte das optische Signal im seriellen Datenfluss dreifach hintereinander gelesen und nur bei Übereinstimmung dieser drei erkannten Signale das Ergebnis zur Datenwerteingabe verwendet werden.

Alternativ oder ergänzend wird der aus dem optischen Signal zu errechnende Zeichencode mehrfach hintereinander übereinstimmend erkannt. Auch hier kann beispielsweise der aus dem seriellen Signal erkannte Zeichencode dreifach nacheinander ermittelt und miteinander verglichen werden. Nur bei übereinstimmender Zeichencodeermittlung würde das Ergebnis als Datenwerteingabe weitergeleitet.

Bevorzugt wird das vom optischen System empfangene Signal einer Signalaufbereitung mit einem Verstärker, einem Tiefpassfilter und einem Analog/Digital-Wandler unterzogen. Durch den Verstärker wird das vom optischen System erzeugte Signal auf einen geeigneten Pegel verstärkt, im Tiefpassfilter werden hochfrequente Störungen unterdrückt und anschließend wird das Signal zur weiteren softwaremäßigen Bearbeitung in ein digitales Signal im Analog/Digital-Wandler umgewandelt.

Mit einer Rechnereinheit, auf der eine Software zum Generieren von auf einem Bildschirm darzustellenden Betätigungsfeldern installiert ist, die in Helligkeits-und/oder Farbstufen seriell codiert sind; dem Bildschirm, auf dem die codierten Betätigungsfelder dargestellt sind; einem optischen System, das ein auf dem/den Betätigungsfeld(ern) auf dem Bildschirm erzeugtes optisches Signal liest und verarbeitet, mit einem optischen Sensor zum Erfassen des optischen Signals, einer Signalaufbereitung, einem Mikrocontroller zur Auswertung des erfassten Signals und einer Ausgabeschnittstelle zur Übergabe des ausgewerteten Signals an die Rechnereinheit als Dateneingabewert wird eine Anordnung zur Durchführung des Verfahrens angegeben.

Nachfolgend wird ein System zur Verwirklichung des erfindungsgemäßen Dateneingabeverfahrens in einem Ausführungsbeispiel anhand von Anordnungsplänen und Diagrammen beschrieben.

Darin zeigt:
- Fig. 1: eine Gesamtanordnung zur Dateneingabe nach der vorliegenden Erfindung,
- Fig. 2: eine beispielhafte Darstellung der relevanten seriellen Signale und
- Fig. 3: eine ermittelte Häufigkeitsverteilung zur Kalibrierung.

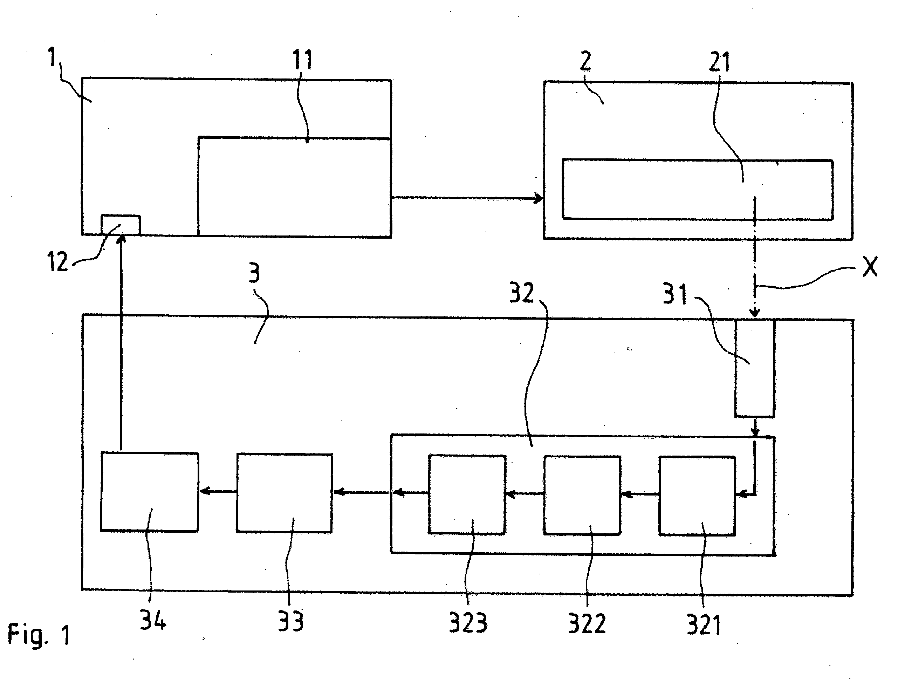

In Fig. 1 ist ein Dateneingabesystem bestehend aus einer Rechnereinheit 1 mit einem Bildschirm 2 und einem optischen System 3 dargestellt.

Die Rechnereinheit 1 enthält eine Software 11, mit der bestimmte Betätigungsfelder 21 auf dem Bildschirm 2 in besonderer Art und Weise generiert werden. Die Software 11 erzeugt für das jeweilige Betätigungsfeld 21 nach einem vorbestimmten Darstellungsmuster Helligkeitsunterschiede, die auf dem Bildschirm 2 wiedergegeben werden. Beispielsweise können die Betätigungsfelder 21 in Form einer virtuellen Tastatur angeordnet sein. Jedes Betätigungsfeld 21 auf dem Bildschirm 2 erzeugt somit ein ganz bestimmtes optisches Signal X, das vom optischen System 3, beispielsweise einem optischen Lesestift durch Zeigen auf dieses Betätigungsfeld 21 auf dem Bildschirm 2 gelesen werden kann.

Das optische System 3 weist einen optischen Sensor 31 zum Empfangen des optischen Signals X auf, das auf dem Bildschirm 2 dargestellt wird. Der optische Sensor 31 leitet sein Empfangssignal zu einer Signalaufbereitung 32 mit Verstärker 321, Tiefpassfilter 322 und Analog/Digital-Wandler 323. Das so aufbereitete und digital gewandelte Signal des optischen Sensors 31 wird dann in einem Mikrocontroller 33 weiterverarbeitet.

Im Mikrocontroller 33 wird das Taktsignal vom ermittelten Signal abgezogen sowie das definierte Kalibrierungs-, Synchronisations- und/oder Leersignal entfernt, so dass das Datensignal als binärer Zeichencode ermittelt wird. Dieser Zeichencode wird über eine Ausgabeschnittstelle 34 am optischen System 3 an eine Standardschnittstelle 12 der Rechnereinheit 1 übermittelt. Entsprechend der Zeichencodezuweisung wird in der Rechnereinheit 1 aus dem vom optischen System 3 übermittelten Zeichencode der Dateneingabewert erzeugt und dem entsprechenden System in der Rechnereinheit 1 zugeführt, womit beispielsweise beliebige Steuervorgänge auslösbar sind.

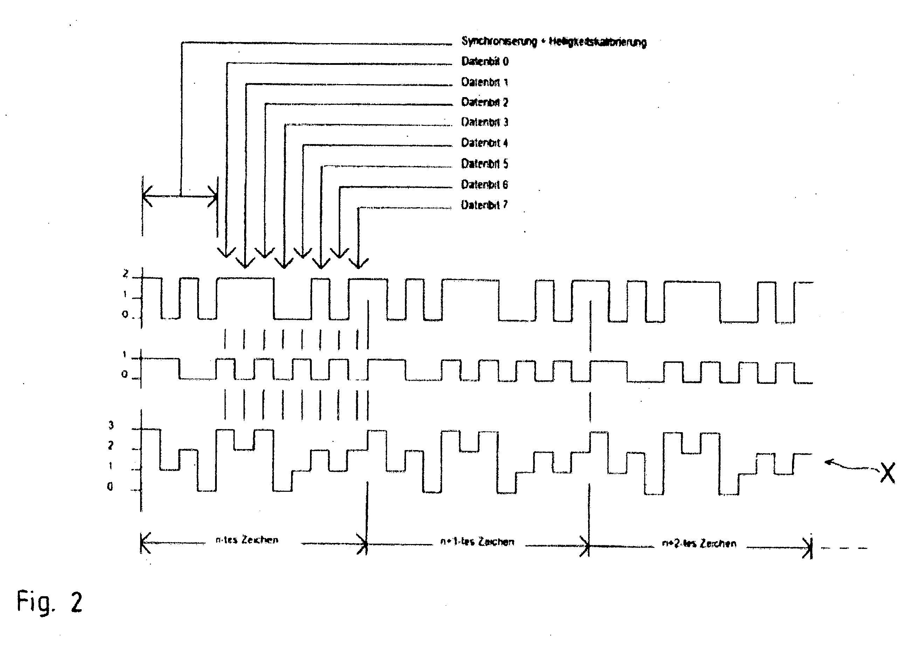

In Fig. 2 ist dargestellt, wie das auf dem Bildschirm 2 als Betätigungsfeld 21 dargestellte optische Signal X zusammengesetzt ist. Es besteht aus einem ersten seriellen, digitalen Signal, das eine Amplitude von 2 hat, also zwischen den Zuständen 0 und 2 wechselt. Das erste serielle Signal besteht aus insgesamt 12 Bit, von denen 4 Bit ein Kalibrierungs-, Synchronisations- und/oder Leersignal und 8 Bit den binären Zeichencode darstellen. Aus dem 8-stelligen binären Zeichencode können 2⁸ gleich 256 verschiedene Zeichen erkannt werden. Beispielsweise handelt es sich um den bekannten ASCII-Code.

Das zweite serielle Signal ist ein Taktsignal, das sich ebenfalls alle 12 Bitpositionen wiederholt. Das Taktsignal weist eine Amplitude von 1 auf, es verändert sich also zwischen den Zuständen 0 und 1. Die ersten vier Bitpositionen des 12 Bit langen Signals, die dem Kalibrierungs-, Synchronisations- und/oder Leersignal zuzuordnen sind, weisen als Besonderheit zunächst zwei nacheinander folgende Einsen und dann zwei nacheinander folgende Nullen auf. Die übrigen 8 Bit des Taktsignals bestehen aus kontinuierlichen bitweisen Wechseln zwischen den Zuständen 1 und O.

Durch Addition des ersten seriellen Signals mit dem zweiten seriellen Signal entsteht das auf dem Bildschirm 2 am jeweiligen Betätigungsfeld 21 darzustellende optische Signal X. Das optische Signal X zeichnet sich dadurch aus, dass sich zwei aufeinander folgende Datenbits um mindestens eine Helligkeitsstufe unterscheiden und dass insgesamt vier Helligkeitsstufen, nämlich 0, 1, 2 und 3 verwirklicht sind. Dieses optische Signal X besteht aus einem vier Bit langen optischen Kalibrierungs-, Synchronisations- und/oder Leersignal, das alle vier Helligkeitsstufen aufweist und aus dem Datensignal überlagert mit dem Taktsignal als 8 Bit langes Zeichen.

Dieses optische Signal wird auf dem Bildschirm 2 auf einem Betätigungsfeld 21 durch die modulierten Helligkeitsunterschiede dargestellt und von dem optischen System 3 (optischer Lesestift) gelesen. Das empfangene Signal wird im Verstärker 321 auf einen geeigneten Pegel verstärkt und etwaige hochfrequente Störungen durch den Tiefpassfilter 322 unterdrückt. Im Analog/DigitalWandler 323 wird das Signal in einer hohen Abtastrate digitalisiert, um es dann im Mikrocontroller 33 auszuwerten.

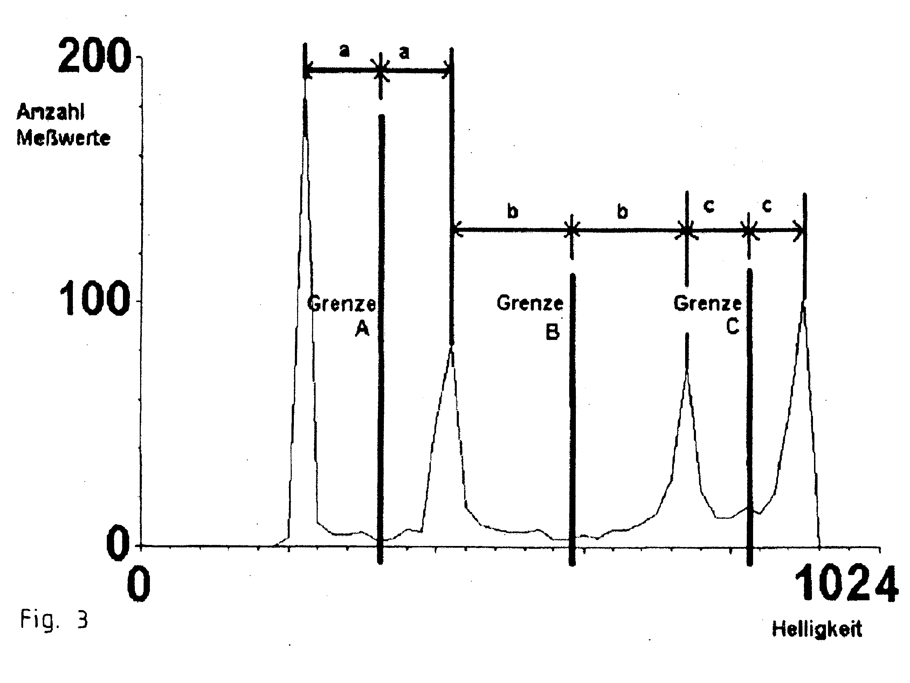

Durch die besondere Datenstruktur, nämlich der eineindeutigen Erkennbarkeit des optischen Kalibrierungs-, Synchronisations- und/oder Leersignals wird dieses Signal zur Kalibrierung, nämlich Bestimmung der vier Helligkeitsstufen sowie der dazwischen liegenden Grenzwerte herangezogen. Dafür werden die durch die hohe Abtastrate mehrfach abgetasteten Bitwerte des optischen Kalibrierungs-, Synchronisations- und/oder Leersignals in einem Häufigkeitsspektrum dargestellt. In Fig. 3 ist ein derartiges Häufigkeitsspektrum mit Hilfslinien dargestellt. Im dargestellten Ausführungsbeispiel wird der am Bildschirm darstellbare Helligkeitsbereich in 1024 Helligkeitsschritte unterteilt. Die jeweiligen Helligkeitswerte wurden im in Fig. 3 dargestellten Ausführungsbeispiel über ein vollständiges optisches Signal erfasst. Bevorzugt können die jeweiligen Helligkeitswerte in den ersten 4 Bit des optischen Kalibrierungs-, Synchronisations- und/oder Leersignals erfasst und als Anzahlmesswerte der Y-Achse zugeordnet werden.

Aufgrund der vier verschiedenen Helligkeitsstufen in diesem Kalibrierungs-, Synchronisations- und/oder Leersignal bilden sich vier Maxima aus, die den relativen, momentanen Helligkeitswerten der vier Stufen entsprechen. Um die nachfolgenden Datenwerte den jeweiligen Helligkeitsstufen zuordnen zu können, werden Grenzwerte A, B und C durch Halbieren des Helligkeitsabstandes zweier aufeinander folgender Maxima ermittelt.

Somit können die nachfolgend vom optischen Sensor 31 erkannten 8 Datenbits durch den Mikrocontroller 33 der jeweiligen Helligkeitsstufe zugeordnet werden. Nach Abzug des Taktsignals kann somit im Mikrocontroller 33 das Datensignal als binärer Zeichencode ermittelt werden und über die Ausgabeschnittstelle 34 an die Rechnereinheit 1 über Standardschnittstelle 12 übermittelt werden. Entsprechend können mit diesem Dateneingabesystem auf einem herkömmlichen Bildschirm beliebiger Art, beispielsweise LCD, TFT-, CRT-, Plasma-Monitore unabhängig von Hersteller und seiner jeweiligen Einstellung von Kontrast und Helligkeit ein oder mehrere Betätigungsfelder 21, beispielsweise als virtuelle Tastatur, dargestellt und vom Lesestift (optisches System 3) erfasst werden. Höherfrequente Signalanteile des Bildschirms 2 werden vom optischen Sensor 31 zwar erfasst, jedoch durch die Tiefpassfilterung eliminiert, so dass nur die niederfrequenten Signalanteile der Helligkeitsmuster, nämlich dem optischen Signal, verarbeitet werden. Die höherfrequenten Signalanteile ergeben sich beispielsweise durch die Bild- und Zeilenwechselansteuerung des Bildschirms 2. Ebenso werden Unterschiede im Kontrastumfang und der Grundhelligkeit der vier Helligkeitsstufen durch die intelligente Signalverarbeitung im Lesestift 3 dynamisch korrigiert, da die vier Helligkeitsstufen und die dazwischenliegenden Grenzwerte A, B, C bei jedem Lesevorgang nachkorrigiert werden. Dazu wird das gefilterte Sensorsignal mit dem Analog/Digital-Wandler 323 in einen Zahlenwert umgewandelt und dem Mikrocontroller 33 zugeführt. Dadurch wird der gesamte Helligkeitsbereich zwischen Weiß und Schwarz erfasst. Beim Auftreten eines kontinuierlichen Signalmusters durch das Aufsetzen des Lesestifts 3 auf ein Betätigungsfeld 21, erfolgt eine Analyse des optischen Signals X. Die Zahlenwerte der vier auftretenden Signalstufen werden jeweils gemittelt. Aus den Abständen zwischen den einzelnen Stufen wird der Grenzwert A, B, C für die Auswertung der Helligkeitsstufen durch Annahme des halben Abstandes zwischen zwei aufeinander folgenden Helligkeitsstufen gebildet.

Somit wird durch Auflegen des Lesestiftes 3 an der entsprechenden Position des Betätigungsfeldes 21 auf dem Bildschirm 2 das darin codierte Signal erkannt und der Rechnereinheit über die Standardschnittstelle 12 als Eingabe zur Verfügung gestellt. Durch das Aufsetzen auf ein am Bildschirm dargestelltes Betätigungsfeld 21 wird die Analyse des Signals ausgelöst. Das optische System 3 wandelt dann das zeitlich ablaufende Helligkeitsmuster in ein binäres Signal und einen zugeordneten Zeichencode. Die Ausgabeschnittstelle 34 überträgt dann dieses Zeichen genau einmal an die Rechnereinheit 1. Erst mit dem Abheben des Lesestifts 3 vom angewählten Zeichen (Betätigungsfeld 21) und damit dem Ende des Signalstroms kann ein neues Zeichen eingegeben werden.

Somit kann mit diesem System eine Rechnereinheit und eine dahinter stehende Produktionsmaschine ohne gesonderte Tastatur oder drucksensitiven Bildschirm am Bildschirm gesteuert werden. Benötigt wird dafür lediglich der optische Lesestift, der eine hohe Zuverlässigkeit aufweist.

### Bezugszeichenliste

- 1: Rechnereinheit
- 11: Software
- 12: Standardschnittstelle

- 2: Bildschirm
- 21: Betätigungsfeld

- 3: optisches System, Lesestift
- 31: optischer Sensor
- 32: Signalaufbereitung
- 321: Verstärker
- 322: Tiefpassfilter
- 323: Analog/Digital-Wandler
- 33: Mikrocontroller
- 34: Ausgabeschnittstelle

- A, B, C: Grenzwert
- X: optisches Signal

## Patentansprüche

1. Verfahren zur Dateneingabe für ein Datenverarbeitungssystem mit einem Bildschirm (2), einer Rechnereinheit (1) und einem optischen System (3), wobei auf dem Bildschirm (2) ein oder mehrere Betätigungsfelder (21) abgebildet werden, deren Helligkeit und/oder Farbe fortlaufend in einem optischen Signal (X) dargestellt, diese Helligkeits- und/oder Farbänderung vom optischen System (3) detektiert und zu einem Dateneingabewert umgewandelt wird, **dadurch gekennzeichnet, dass** wenigstens vier verschiedene Helligkeits-und/oder Farbstufen definiert werden, wobei die Änderungen der Helligkeit und/oder Farbe des Betätigungsfeldes oder der Betätigungsfelder (21) um die wenigstens vier Stufen ein Taktsignal zur Synchronisierung sowie ein binäres Datensignal als ein serielles Signal darstellen, wobei das dargestellte optische Signal (X) durch Addition des Datensignals und des Taktsignals mit zu einander unterschiedlichen Amplituden generiert wird und wobei der Eingabewert nach dem Lesen des optischen Signals (X) durch Subtraktion des bekannten Taktsignals erkannt wird und dem System als Zeichencode zur Dateneingabe übergeben wird.

2. Verfahren nach Anspruch 1, **dadurch gekennzeichnet, dass** die Amplituden des binären Datensignals und des Taktsignals sich um den Faktor 2 unterscheiden.

3. Verfahren nach Anspruch 1 oder 2, **dadurch gekennzeichnet, dass** genau vier Helligkeits- und/oder Farbstufen gewählt werden, die ein Quartärsystem mit den Stufen 0, 1, 2 und 3 bilden.

4. Verfahren nach Anspruch 1, 2 oder 3, **dadurch gekennzeichnet, dass** das Datensignal aus einem binären Zeichencode definierter Länge besteht, dem ein definiertes Kalibrierungs-, Synchronisations- und/oder Leersignal einer definierten Länge vorangestellt wird, welches nicht während der Darstellung des Datensignals als optisches Signal (X) auftreten kann.

5. Verfahren nach Anspruch 4, **dadurch gekennzeichnet, dass** der Zeichencode 8-Bit aufweist.

6. Verfahren nach Anspruch 4 oder 5, **dadurch gekennzeichnet, dass** das definierte Kalibrierungs-, Synchronisations- und/oder Leersignal einer definierten Länge genau 4 Bits aufweist.

7. Verfahren nach Anspruch 6, **dadurch gekennzeichnet, dass** zur Erzeugung des definierten Kalibrierungs-, Synchronisations- und/oder Leersignal das Taktsignal an den Bit-Positionen 2 und 3 des zu erzeugenden optischen Kalibrierungs-, Synchronisations- und/oder Leersignal miteinander vertauscht wird.

8. Verfahren nach einem der vorangehenden Ansprüche, **dadurch gekennzeichnet, dass** ein nächstes Bit des optischen Signals (X) erkannt wird, wenn sich das optische Signal (X) um mindestens eine Stufe der Helligkeits- und/oder Farbstufen verändert.

9. Verfahren nach einem der vorangegangenen Ansprüche, **dadurch gekennzeichnet, dass** aus dem vom optischen System (3) mehrfach hintereinander erfassten Helligkeiten und/oder Farben des Betätigungsfeldes (21) ein Wahrscheinlichkeitsspektrum ermittelt und innerhalb des Spektrums aus den Extrema der Häufungen die Lage der Helligkeits- und/oder Farbstufen kalibriert werden.

10. Verfahren nach Anspruch 9, **dadurch gekennzeichnet, dass** die Extrema der Häufungen des Spektrums zur Bestimmung von Grenzwerten zwischen den Helligkeits- und/oder Farbstufen herangezogen werden.

11. Verfahren nach Anspruch 9 oder 10, **dadurch gekennzeichnet, dass** das optische Signal (X) vom optischen System (3) im Gegensatz zu dem Datensignal mit einer deutlich höheren Abtastrate abgetastet wird.

12. Verfahren nach den Ansprüchen 4 bis 11, **dadurch gekennzeichnet, dass** das optische Signal (X) des darzustellenden Eingabewerts durch das definierte Kalibrierungs-, Synchronisations- und/oder Leersignal aus den mindestens vier Helligkeits- und/oder Farbstufen von einem inaktiven Zustand eindeutig unterscheidbar wird und dass das optische System (3) mittels dieser vier aktuell erkannten Stufen kalibriert wird.

13. Verfahren nach einem der vorangegangenen Ansprüche, **dadurch gekennzeichnet, dass** das zu erkennende optische Signal (X) mehrfach hintereinander übereinstimmend erkannt wird.

14. Verfahren nach einem der vorangegangenen Ansprüche, **dadurch gekennzeichnet, dass** der aus dem optischen Signal (X) zu errechnende Zeichencode mehrfach hintereinander übereinstimmend erkannt wird.

15. Verfahren einem der vorangehenden Ansprüche, **dadurch gekennzeichnet, dass** das vom optischen System (3) empfangene Signal einer Signalaufbereitung mit einem Verstärker (321), einem Tiefpassfilter (322) und einem Analog/Digital-Wandler (323) unterzogen

16. Anordnung zur Durchführung des Verfahrens nach einem der vorangehenden Ansprüche mit:
- einer Rechnereinheit (1), auf der eine Software (11) zum Generieren von einem oder mehreren auf einem Bildschirm (2) darzustellenden Betätigungsfeldern (21) installiert ist, die in Helligkeits- und/oder Farbstufen seriell codiert sind;
- dem Bildschirm (2), auf dem ein oder mehrere codierte Betätigungsfelder (21) dargestellt sind;
- einem optischen System (3), das ein auf dem/den Betätigungsfeld(ern) (21) auf dem Bildschirm (2) erzeugtes optisches Signal (X) liest und verarbeitet, mit
-- einem optischen Sensor zum Erfassen des optischen Signals (X),
-- einer Signalaufbereitung (32),
-- einem Mikrocontroller (33) zur Auswertung des erfassten Signals und
-- einer Ausgabeschnittstelle (34) zur Übergabe des ausgewerteten Signals an die Rechnereinheit (1) als Dateneingabewert.

## Claims

1. Method for data input for a data processing system having a screen (2), a computer unit (1) and an optical system (3), wherein one or more control areas (21) are displayed on the screen (2), the brightness and/or colour of which areas is displayed continuously in an optical signal (X), change of this brightness and/or colour being detected by the optical system (3) and converted to a data input value, **characterised in that** at least four different brightness and/or colour steps are defined, the changes of the brightness and/or colour of the control area(s) (21) by the at least four steps representing a clock signal for synchronisation and a binary data signal as a serial signal, the optical signal (X) displayed being generated by addition of the data signal and the clock signal with amplitudes different from one another, and the input value being recognised after the reading of the optical signal (X) by subtraction of the known clock signal and being transferred to the system as a character code for data input.

2. Method according to Claim 1, **characterised in that** the amplitudes of the binary data signal and the clock signal differ by a factor of 2.

3. Method according to Claim 1 or 2, **characterised in that** exactly four brightness and/or colour steps are chosen, which steps form a quaternary system having the steps 0, 1, 2 and 3.

4. Method according to Claim 1, 2 or 3 **characterised in that** the data signal consists of a binary character code of defined length prefixed by a defined calibration, synchronisation and/or dummy signal of a defined length, which cannot occur during the display of the data signal as an optical signal (X).

5. Method according to Claim 4, **characterised in that** the character code has 8 bits.

6. Method according to Claim 4 or 5, **characterised in that** the defined calibration, synchronisation and/or dummy signal of a defined length has exactly 4 bits.

7. Method according to Claim 6, **characterised in that**, to generate the defined calibration, synchronisation and/or dummy signal, the clock signal at the bit positions 2 and 3 of the optical calibration, synchronisation and/or dummy signal to be generated is interchanged.

8. Method according to one of the preceding claims, **characterised in that** a next bit of the optical signal (X) is recognised when the optical signal (X) changes by at least one step of the brightness and/or colour steps.

9. Method according to one of the preceding claims, **characterised in that** a probability spectrum is determined from the brightnesses and/or colours of the control area (21) which are detected by the optical system (3) a plurality of times in succession, and the position of the brightness and/or colour steps within the spectrum is calibrated from the extremes of the accumulations.

10. Method according to Claim 9, **characterised in that** the extremes of the accumulations of the spectrum are used to determine limit values between the brightness and/or colour steps.

11. Method according to Claim 9 or 10, **characterised in that** the optical signal (X) is scanned by the optical system (3) with a significantly higher scanning rate compared with the data signal.

12. Method according to Claims 4 to 11, **characterised in that** the optical signal (X) of the input value to be displayed is clearly distinguishable from an inactive state by the defined calibration, synchronisation and/or dummy signal from the at least four brightness and/or colour steps, and **in that** the optical system (3) is calibrated by means of these four currently recognised steps.

13. Method according to one of the preceding claims, **characterised in that** the optical signal (X) to be recognised is recognised as matching a plurality of times in succession.

14. Method according to one of the preceding claims, **characterised in that** the character code to be calculated from the optical signal (X) is recognised as matching a plurality of times in succession.

15. Method according to one of the preceding claims, **characterised in that** the signal received by the optical signal (3) is subjected to signal conditioning by an amplifier (321), a low-pass filter (322) and an analog/digital converter (323).

16. Arrangement for carrying out the method according to one of the preceding claims having:
- a computer unit (1), on which is installed software (11) for generating one or more control areas (21) to be displayed on a screen (2), which areas are serially coded in brightness and/or colour steps;
- the screen (2), on which one or more coded control areas (21) are displayed;
- an optical system (3), which reads and processes an optical signal (X) generated on the control area(s) (21) on the screen (2), having
-- an optical sensor for detecting the optical signal (X),
-- signal conditioning (32),
-- a microcontroller (33) for evaluating the detected signal, and
-- an output interface (34) for transferring the evaluated signal to the computer unit (1) as a data input value.

## Revendications

1. Procédé pour la saisie de données dans un système de traitement de données comportant un écran (2), une unité de calcul (1) et un système optique (3), un ou plusieurs champs de commande (21) étant reproduits sur l'écran (2), dont la luminosité et/ou la couleur sont représentées en continu dans un signal optique (X), cette variation de la luminosité et/ou de la couleur étant détectée par le système optique (3) et étant convertie en une valeur d'entrée de donnée, **caractérisé en ce qu'**au moins quatre niveaux différents de luminosité et/ou de couleur sont définis, les variations de la luminosité et/ou de la couleur du champ de commande ou des champs de commande (21) sur lesdits au moins quatre niveaux représentant un signal de rythme pour la synchronisation, ainsi qu'un signal de donnée binaire sous la forme d'un signal sériel, le signal optique (X) représenté étant généré par l'addition du signal de donnée et du signal de rythme avec des amplitudes différentes les unes par rapport aux autres et la valeur d'entrée étant détectée après la lecture du signal optique (X) par la soustraction du signal de rythme connu et étant transféré vers le système sous forme de code de caractères pour l'entrée des données.

2. Procédé selon la revendication 1, **caractérisé en ce que** les amplitudes du signal de donnée binaire et du signal de rythme se différencient d'un facteur 2.

3. Procédé selon la revendication 1 ou 2, **caractérisé en ce qu'**exactement quatre niveaux de luminosité et/ou de couleur sont choisis, lesquels forment un système quaternaire avec les niveaux 0, 1, 2 et 3.

4. Procédé selon la revendication 1, 2 ou 3, **caractérisé en ce que** le signal de donnée est formé par un code de caractères binaire de longueur définie, lequel est précédé d'un signal défini de calibrage, de synchronisation et/ou d'espacement d'une longueur définie qui ne peut pas apparaître comme un signal optique (X) pendant la représentation du signal de donnée.

5. Procédé selon la revendication 4, **caractérisé en ce que** le code de caractères comporte 8 bits.

6. Procédé selon la revendication 4 ou 5, **caractérisé en ce que** le signal défini de calibrage, de synchronisation et/ou d'espacement d'une longueur définie comporte exactement 4 bits.

7. Procédé selon la revendication 6, **caractérisé en ce que**, pour générer le signal défini de calibrage, de synchronisation et/ou d'espacement, le signal de rythme est permuté au niveau des positions des bits 2 et 3 du signal optique de calibrage, de synchronisation et/ou d'espacement à générer.

8. Procédé selon l'une des revendications précédentes, **caractérisé en ce qu'**un bit consécutif du signal optique (X) est détecté lorsque le signal optique (X) change d'au moins un niveau parmi les niveaux de luminosité et/ou de couleur.

9. Procédé selon l'une des revendications précédentes, **caractérisé en ce qu'**un spectre de probabilités est déterminé à partir des luminosités et/ou des couleurs du champ de commande (21) détectées à plusieurs reprises consécutivement par le système optique (3), et la position des niveaux de luminosité et/ou de couleur est calibrée à l'intérieur du spectre à partir des extrêmes des cumuls.

10. Procédé selon la revendication 9, **caractérisé en ce que** les extrêmes des cumuls du spectre sont pris en compte pour déterminer les valeurs limites entre les niveaux de luminosité et/ou de couleur.

11. Procédé selon la revendication 9 ou 10, **caractérisé en ce que**, contrairement au signal de donnée, le signal optique (X) est balayé par le système optique (3) avec un taux de balayage nettement plus élevé.

12. Procédé selon l'une des revendications 4 à 11, **caractérisé en ce que** le signal optique (X) de la valeur d'entrée à représenter peut être différencié sans équivoque d'un état inactif par le signal de calibrage, de synchronisation et/ou d'espacement à partir desdits au moins quatre niveaux de luminosité et/ou de couleur, et **en ce que** le système optique (3) est calibré au moyen de ces quatre niveaux actuellement détectés.

13. Procédé selon l'une des revendications précédentes, **caractérisé en ce que** le signal optique (X) à détecter est détecté de manière concordante à plusieurs reprises consécutivement.

14. Procédé selon l'une des revendications précédentes, **caractérisé en ce que** le code de caractères à calculer à partir du signal optique (X) est détecté de manière concordante à plusieurs reprises consécutivement.

15. Procédé selon l'une des revendications précédentes, **caractérisé en ce que** le signal reçu par le système optique (3) est soumis à un traitement de signaux avec un amplificateur (321), un filtre passe-bas (322) et un convertisseur analogique-numérique (323).

16. Agencement destiné à la mise en oeuvre du procédé selon l'une des revendications précédentes, comportant :
- une unité de calcul (1), sur laquelle est installé un logiciel (11) pour générer un ou plusieurs champs de commande (21) à représenter sur un écran (2), lesquels sont codés de façon sérielle dans des niveaux de luminosité et/ou de couleur ;
- l'écran (2), sur lequel sont représentés un ou plusieurs champs de commande (21) codés ;
- un système optique (3) qui lit et traite un signal optique (X) généré sur le ou les champ(s) de commande (21) sur l'écran (2), comportant
-- un capteur optique destiné à détecter le signal optique (X),
-- un traitement de signaux (32),
-- un microcontrôleur (33) destiné à analyser le signal détecté, et
-- une interface de sortie (34) pour transférer le signal analysé vers l'unité de calcul (1) en tant que valeur d'entrée de donnée.
